Europäisches Patentamt

European Patent Office

Office européen des brevets

(19)

(11) Veröffentlichungsnummer: **0 211 008**
**B1**

(12) **EUROPÄISCHE PATENTSCHRIFT**

(45) Veröffentlichungstag der Patentschrift:
**16.08.89**

(51) Int. Cl.⁴: **B 23 K 15/00,** B 41 C 1/02,
H 01 J 37/18

(21) Anmeldenummer: **86900599.1**

(22) Anmeldetag: **07.01.86**

(86) Internationale Anmeldenummer:
**PCT/DE 86/00001**

(87) Internationale Veröffentlichungsnummer:
**WO 86/04282** (31.07.86 Gazette 86/17)

(54) **DRUCKDICHTE VAKUUMKAMMER EINER ELEKTRONENSTRAHL-GRAVIERMASCHINE ZUR ELEKTRONENSTRAHLGRAVUR VON DRUCKZYLINDERN FÜR DIE DRUCKTECHNIK.**

(30) Priorität: **15.01.85 DE 3501040**
**16.01.85 DE 3501164**

(43) Veröffentlichungstag der Anmeldung:
**25.02.87 Patentblatt 87/9**

(45) Bekanntmachung des Hinweises auf die Patenterteilung:
**16.08.89 Patentblatt 89/33**

(84) Benannte Vertragsstaaten:
**AT BE CH DE FR GB IT LI NL SE**

(56) Entgegenhaltungen:
**DE-A- 2 111 628**
**FR-A- 2 020 017**

(73) Patentinhaber: **DR.-ING. RUDOLF HELL GmbH,**
**Grenzstrasse 1-5, D-2300 Kiel 14 (DE)**

(72) Erfinder: **ANGELBECK, Rolf, Grüffkamp 26,**
**D-2300 Kiel 17 (DE)**
Erfinder: **GESELL, Reinhard, Weidenkamp 17,**
**D-2314 Schönkirchen (DE)**
Erfinder: **PENZA, Hans, Matthias-Claudius-Strasse 30,**
**D-2308 Preetz (DE)**

## Beschreibung

In der Drucktechnik, insbesondere im Tiefdruck, werden zur Herstellung der Druckerzeugnisse gravierte Druckzylinder verwendet, die in die Druckmaschinen eingespannt und mit den entsprechenden Druckfarben eingefärbt werden. Die Druckfarbe wird von dem Druckzylinder auf den Bedruckstoff übertragen. Es ist bereits aus der US-PS 3 246 079 und der US-PS 3 404 254 bekannt, Druckzylinder für die Drucktechnik mittels eines hochenergetischen fokussierten Elektronenstrahls zu gravieren. Da ein entsprechend fokussierter Elektronenstrahl nur im Vakuum erzeugt werden kann, befinden sich der Elektronenstrahlaustritt aus dem Elektronenstrahlerzeuger und der zu gravierende Druckzylinder in einem Vakuumgefäß. Da diese Druckzylinder erhebliche Abmessungen haben und zur Gravur in Rotation versetzt und axial am Strahl vorbeigeführt werden müssen, sind Vakuumgefäße erforderlich, die mehr als die doppelte Länge der Druckzylinder aufweisen und einen Durchmesser haben, der grösser als der Druckzylinder selbst ist. Da die Druckzylinder von außen in eine solche Vakuumkammer eingebracht werden und anschließend die Vakuumkammer wieder geschlossen wird, werden an die Vakuumkammer bezüglich Stabilität und Dichtigkeit hohe Anforderungen gestellt, da die Elektronenstrahlgravur nur in einem ausreichend hohen Vakuum stattfinden kann.

Um Druckgefäße abzudichten, sind bereits Schraubdeckel oder mittels einzelner Schrauben verspannte Deckel bekannt. Solche Deckel sind aber nicht sehr bedienungsfreundlich, und bei der hier geforderten hohen mechanischen Festigkeit weisen sie ein entsprechend hohes Gewicht auf und können nur mit entsprechenden Hebezeugen entfernt oder aufgebracht werden.

Der vorliegenden Erfindung liegt daher die Aufgabe zugrunde, eine druckdichte Vakuumkammer zur Aufnahme von Druckzylindern für die Gravur von Druckzylindern mittels Elektronenstrahl zu schaffen, der auf einfache Weise geöffnet und geschlossen werden kann und zu geringen Rüstzeiten für die Maschine führt.

Die Erfindung erreicht dies durch die im kennzeichnenden Teil des Anspruchs 1 angegebenen Merkmale. Vorteilhafte Weiterbildungen sind in den Unteransprüchen 2 bis 11 beschrieben.

Die Erfindung wird im folgenden anhand der Figuren 1 bis 12 näher erläutert.

Es zeigen:

Fig. 1 eine perspektivische Ansicht einer Elektronenstrahl-Graviermaschine mit geschlossenem Deckel,

Fig. 2 eine perspektivische Ansicht einer Elektronenstrahl-Graviermaschine mit geöffnetem Deckel,

Fig. 3 einen Querschnitt durch das Vakuumgefäß, den Deckel und den Betätigungsmechanismus bei geschlossenem Zustand des Deckels,

Fig. 3a eine Ausschnittzeichnung der Dichtung des Deckels,

Fig. 4 eine Querschnittzeichnung gemäß Fig. 3 mit angehobenem Deckel,

Fig. 5 eine Querschnittzeichnung gemäß Fig. 3 mit teilweise seitlich verschobenem Deckel,

Fig. 6 eine Querschnittzeichnung der Fig. 3 mit geöffnetem Deckel in der Endposition,

Fig. 7 eine perspektivische Ansicht einer weiteren Ausführungsform der Erfindung mit einem als Pendel ausgebildeten Gegengewicht für den Deckel,

Fig. 8 die Anordnung nach Fig. 7 bei geschlossenem Deckel,

Fig. 9 die Anordnung nach Fig. 8 bei angehobener Ringschiene 7,

Fig. 10 die Anordnung nach Fig. 9 bei geöffnetem Deckel,

Fig. 11 eine Querschnittzeichnung einer weiteren Variante der Erfindung mit einem Hubglied als Ausgleichsvorrichtung für das Gewicht des Deckels und

Fig. 12 eine Querschnittzeichnung einer weiteren Variante der Erfindung mit einer Feder und einer Kurvenscheibe als Gewichtsausgleich für den Deckel.

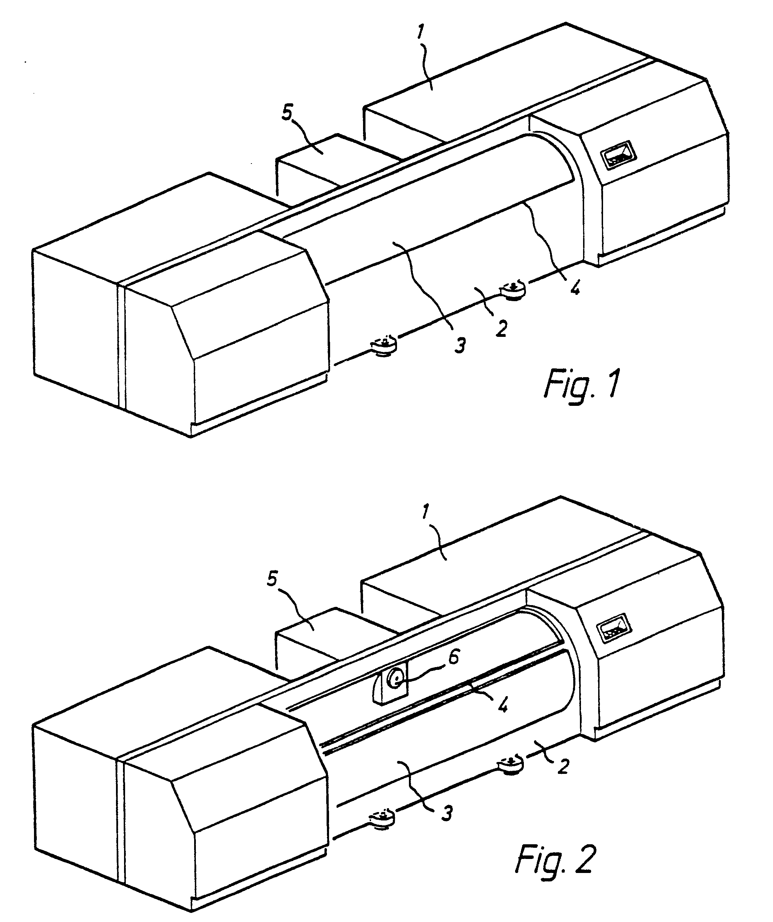

Fig. 1 zeigt einen Elektronenstrahl-Druckform-Graviermaschine 1, die ein druckdichtes Vakuumgefäß 2, d.h. eine Druckkammer, aufweist, die mit einem Deckel 3 verschlossen ist. Ein nicht dargestellter Gravurzylinder wird durch die Deckelöffnung 4 der Fig. 2 von oben in die Graviermaschine 1 eingebracht. Der Deckel 3 wird zum Öffnen des Gefäßes aus der Öffnung 4 herausgehoben und mittels spezieller an seinen Enden vorgesehener Transportvorrichtungen, die später noch im einzelnen dargestellt und beschrieben werden, in die Offenstellung verfahren. Im mittleren Bereich der Graviermaschine ist eine Elektronenstrahlkanole 5 an das Vakuumgefäß angeflanscht, dessen Elektronenstrahl-Austrittsöffnung 6 innerhalb des Druckgefäßes 2 auf den nicht dargestellten Druckzylinder weist. Der Druckzylinder wird im Betrieb an seinen Stirnenden von Spannzangen gehalten und mittels eines Motors in Umdrehung versetzt und zur Gravur axial an dem Elektronenstrahl vorbeigeführt.

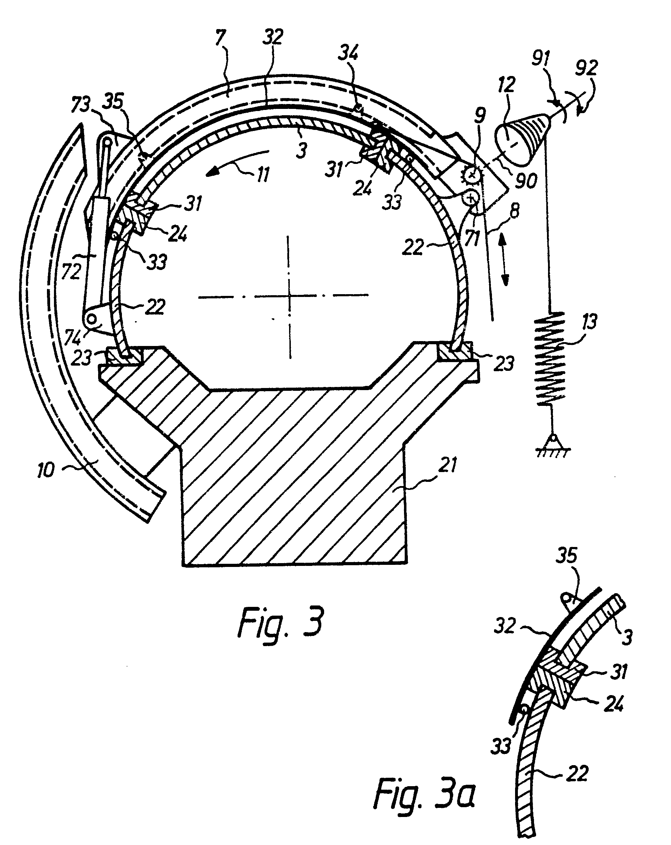

In Fig. 3 ist ein Schnittbild durch das Vakuumgefäß 2 gezeigt, aus dem die Konstruktion des Vakuumgefäßes und des Deckels ersichtlich sind. Die Druckform-Graviermaschine besteht in ihrem Grundaufbau aus einem maschinenbettartigen Unterteil 21, auf dem eine Haube 22 druckdicht aufgesetzt ist. Die Haube 22 besteht aus einem tonnenartigen Gewölbe, das auf einer das ganze Unterteil umgebenden Dichtfläche 23 aufliegt. Der Deckel 3 kann so hergestellt werden, daß er als Segment aus der Haube ausgesägt wird. Zur Abdichtung des Deckels mit der Haube sind jeweils an der Haube Tragflächen 24 und am Deckel Tragflächen 31 angearbeitet, auf denen der Deckel auf der Haubenöffnung aufliegt. Durch diese Art der Deckelkonstruktion und Deckelauflage wird gewährleistet, daß an den Stoßstellen keine seitlichen Kräfte auftreten, sondern nur senkrecht auf den Stoßflächen stehende Kräfte entstehen.

Der Deckel weist ein äußeres Teil 32 auf, das der Krümmung des Deckels angepaßt ist und über die Stoßstellen hinausragt und am Rand eine Ringdichtung 33 besitzt, die die Vakuumabdichtung des Deckels übernimmt. In Fig. 3a ist diese Dichtzone im einzelnen näher dargestellt. Wie bereits erwähnt, liegen die Stützflächen 31 und 24 aufeinander auf und die Ringdichtung 33, die den Deckel ganz umgibt, übernimmt die Dichtung zwischen Haube und äußerem Deckelteil.

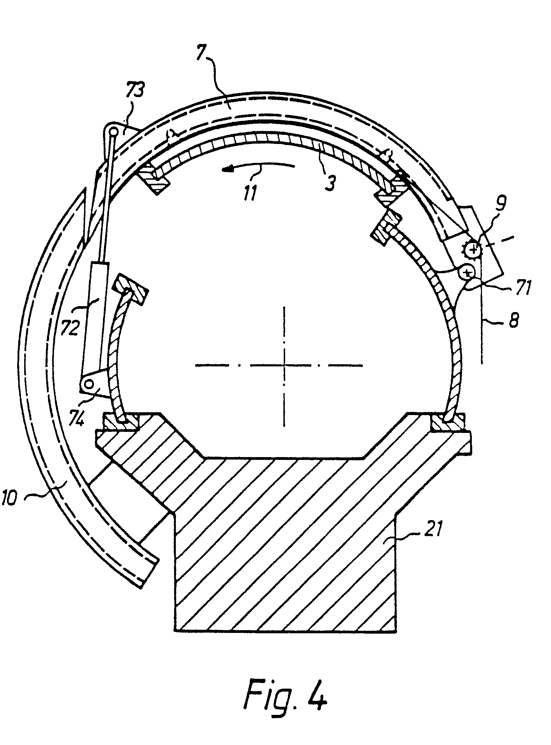

Das äußere Deckelteil 32 weist Rollen 34 und 35 auf, die in eine Ringschiene 7 eingreifen. Die Ringschiene 7 ist an einem seitlich angeordneten Drehpunkt 71 als gekrümmter Hebel angelenkt. Mittels einer Kette 8, die über eine Umlenkrolle 9 geführt ist und an der Ringschiene 7 in einem Abstand vom Drehpunkt 71 angreift, kann die Ringschiene 7 mit dem Deckel 3 durch Verschwenken um den Drehpunkt 71 angehoben werden. Dies kann durch ein Hubglied 72 oder durch die Kette 8 oder beides erfolgen. Das Hubglied 72, das hydraulisch betätigt werden kann, greift an der Ringschiene 7 an einem Lagerbock 73 und an der Haube 22 an einem Lagerbock 74 an. Durch dieses Anheben der Ringschiene 7 wird eine Verbindung mit einer zweiten, seitlich vom Deckel angeordneten Ringschiene 10 hergestellt, die zusammen mit der Ringschiene 7 eine kreisförmige Führungsbahn ergibt, innerhalb der der Deckel auf seinen Rollen 34 und 35 gleiten und in Pfeilrichtung 11 verschoben werden kann. Die Öffnung des Vakuumgefäßes erfolgt nun derart, daß der Deckel in den Ringschienen 7 und 10 verfahren wird, was in den Figuren 4, 5 und 6 in den einzelnen Zwischenphasen näher dargestellt ist.

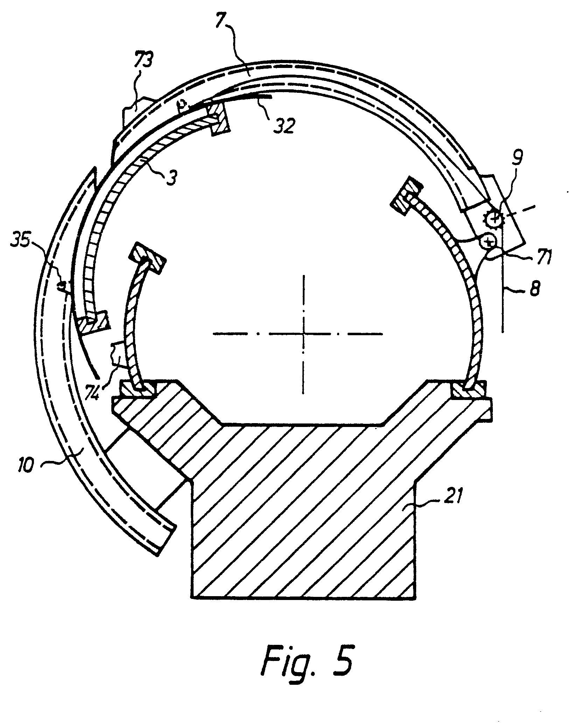

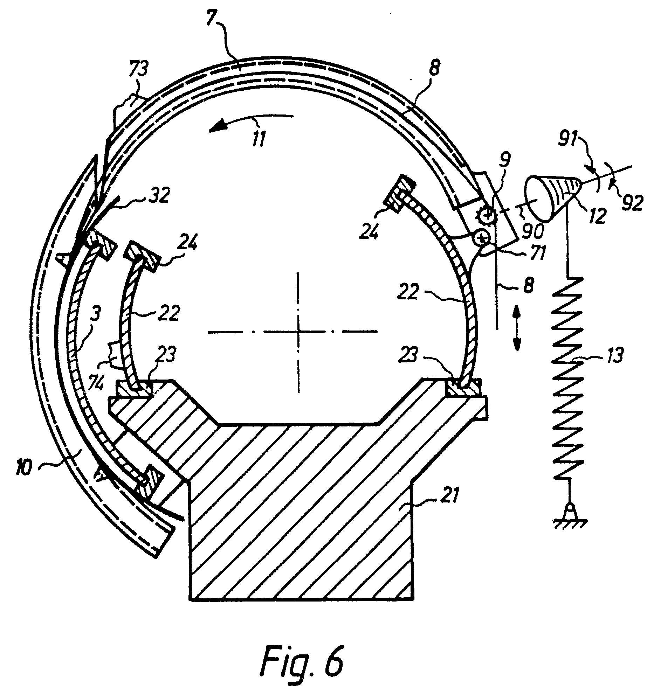

Fig. 3 zeigt den Deckel 3 in geschlossenem Zustand, Fig. 4 in angehobenem Zustand, wobei das Anheben der Ringschiene 7 durch das Hubglied 72 erfolgt. Fig. 5 zeigt den Deckel in etwa halb geöffnetem und Fig. 6 in völlig geöffnetem Zustand, wobei in den Figuren 5 und 6 aus Gründen der Übersichtlichkeit das Hubglied 72 nicht dargestellt wurde. Das Schließen des Deckels verläuft entsprechend umgekehrt, wobei der Deckel am Ende des Schließvorgangs abgesenkt wird und die in Fig. 3 gezeichnete Lage wieder einnimmt.

Das Kettenrad 9 ist über eine Stange 90 mit einer Seilscheibe 12 verbunden, auf die eine Zugfeder 13 einwirkt, die an einem Ende an einem ortsfesten Punkt befestigt ist. Die Feder dient zum Gewichtsausgleich des Deckels, und die Seilscheibe 12 ist wegen der je nach Stellung des Deckels 3 an der Kette auftretenden unterschiedlichen Kräfte spiralförmig ausgebildet. Die Feder 13 hat zusätzlich eine ansteigende Federkennlinie. Die Steigung der Seilscheibe und Federkennlinie sind so bemessen, daß die Rückstellkraft, die durch das Rad 9 auf die Kette 8 übertragen wird, mit steigender Verschiebung des Deckels aus seiner Schließstellung in Richtung «Öffnen» zunimmt.

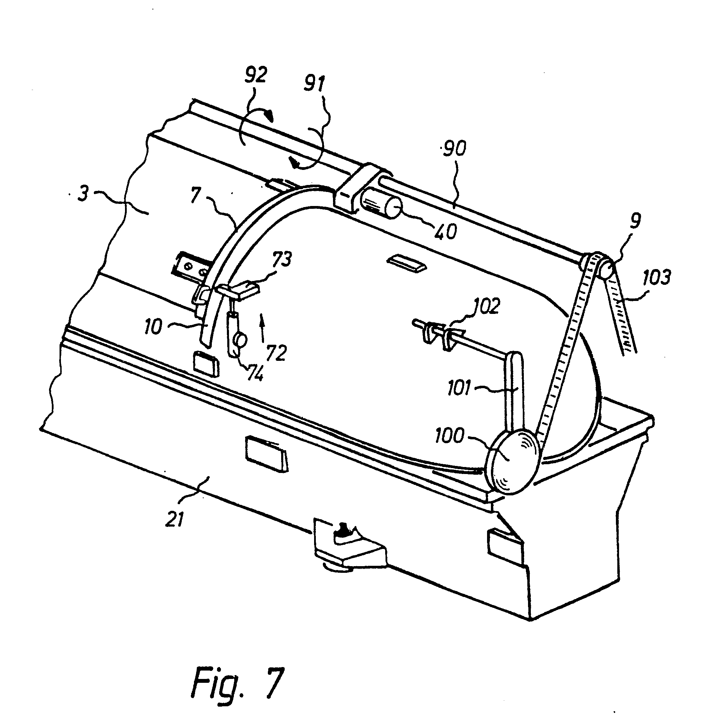

Um das Öffnen und Schließen des Deckels gleichmäßig und ohne Verkanten des Deckels durchzuführen, können zwei solche in den Figuren 3 bis 6 dargestellte gleiche Deckelführungsmechanismen vorgesehen sein, und zwar jeweils an den Stirnenden des Deckels. Es ist dann ausreichend, wenn nur einer der beiden Mechanismen mit einem Antriebsmotor ausgerüstet ist, der zum Antrieb auf das Kettenrad 9 einwirkt. Der zweite Deckelführungsmechanismus wird durch die torsionssteife Welle 90 angetrieben, die das Kettenrad 9 des einen Deckelführungsmechanismus mit dem Kettenrad 9 des anderen Deckelführungsmechanismus verbindet. Der Motor, der das Kettenrad in Pfeilrichtung 91 bzw. 92 dreht, ist später in Fig. 7 näher dargestellt. Das Anheben des Deckels 3 und das Verschwenken der Führungsschiene 7 erfolgt durch ein Hubglied 72. Die Führungsschiene 7 wird angehoben und rastet mit der Schiene 10 ein, so daß der Deckel infolge seiner Schwerkraft unter Drehung des Rades 9 in Richtung 91 anschließend die in den Figuren 4, 5 und 6 gezeigten Positionen einehmen kann. Das Schließen des Deckels erfolgt, indem auf die Kette 8 vom Motor eine Kraft einwirkt, die das Kettenrad in Pfeilrichtung 92 dreht. Ist der Deckel im Anschlag, so wird die Führungsschiene 7 wieder abgesenkt, und der Deckel ist im geschlossenen Zustand, d.h. in der in Fig. 3 gezeigten Position.

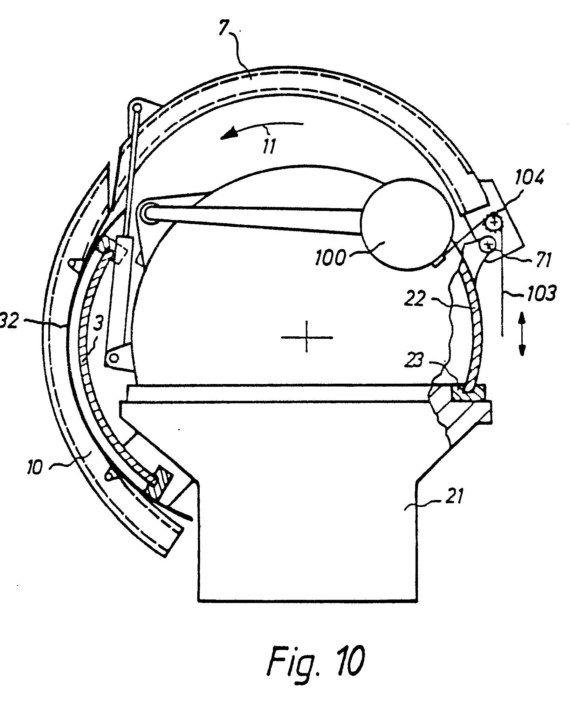

In Fig. 7 ist die in den Figuren 1 und 2 dargestellte Elektronenstrahl-Graviermaschine 1 in perspektivischer Darstellung ohne Verkleidung und Elektronenkanone 5 dargestellt, um den Betätigungsmechanismus des Deckels 3 näher zu erläutern. Man erkennt die Ringschienen 7 und 10 zu beiden Seiten des Deckels 3, mit denen er, wie bereits in den Figuren 3 bis 6 erwähnt, von der Öffnungs- in die Schließstellung, bzw. umgekehrt, gebracht wird. Die Fig. 7 zeigt eine Variante der Figuren 3 bis 6, was die Betätigung des Deckelmechanismus angeht. Anstelle der Seilscheibe 12 und der Feder 13 ist ein Motor 40 vorgesehen, der an das Zahnrad 9 der Fig. 3, das auf der Stange 90 sitzt, angreift. In Fig. 7 ist anstelle der Feder 13 der Fig. 3 ein Gegengewicht 100 vorgesehen, das über einen Hebel 101, der in einem Lager 102 am Deckel 3 angelenkt ist, mittels einer Kette 103, die über ein Zahnrad 104 der Stange 90 läuft, bei der Bewegung des Deckels in die in Fig. 10 gezeigte Lage gebracht wird. Die Kette 103 ist am Gewicht 100 befestigt und hebt das Gewicht bei Drehung der Stange 90 in Pfeilrichtung 92 an.

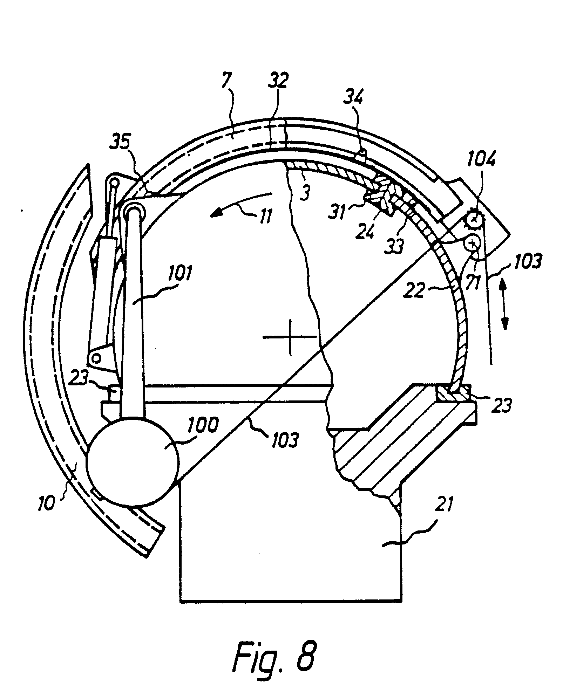

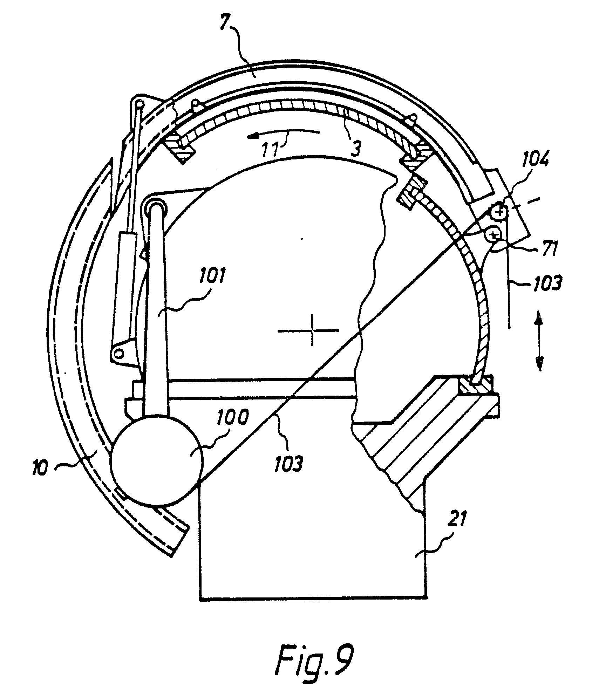

Fig. 8 zeigt die Lage des Gewichts 100 in Ruhelage, d.h. bei geschlossenem Deckel 3, Fig. 9 bei leicht angehobenem Deckel und Fig. 10 bei geöffnetem Deckel 3.

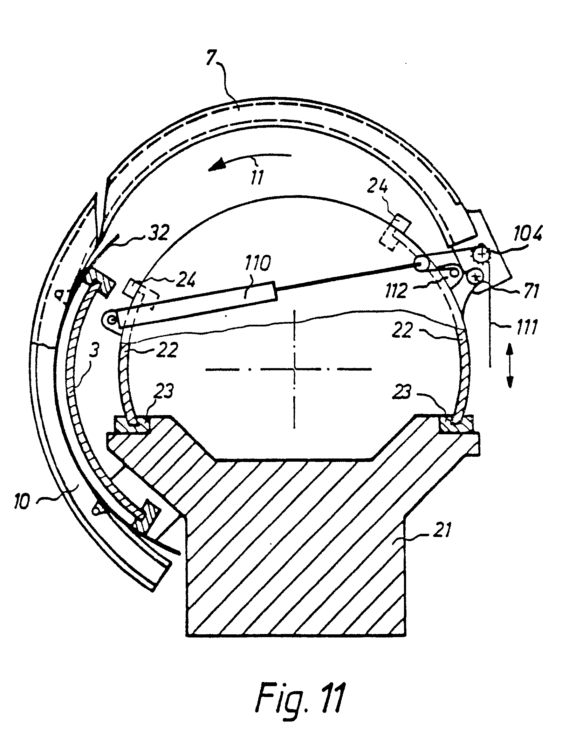

Fig. 11 zeigt eine weitere Ausführungsform der Erfindung, bei der das Gegengewicht durch ein weiteres Hubglied 110 zum Ausgleich des Deckelgewichts ersetzt ist. Das Hubglied 110, das vorzugsweise hydraulisch oder pneumatisch betätigt wird, greift einerseits an einem Seilzug 111, welches ein Zahnrad 104 angreift, das an der Stange 90 befestigt ist und zum anderen an einem Auflager 112 der Haube 22 an. Die auf das Hubglied 110 ausgeübte Kraft wird entsprechend der Rückstellkraft des Gewichts 100 dimensioniert.

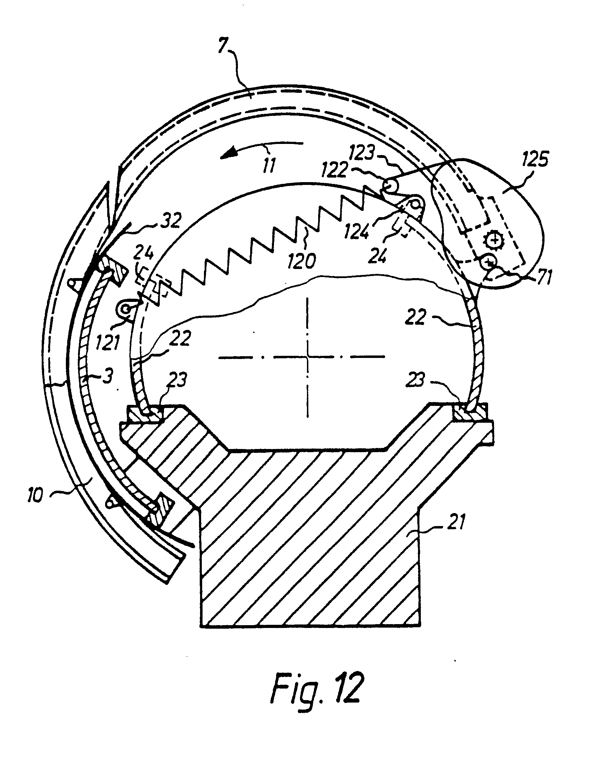

In Fig. 12 ist ein weiteres Beispiel für eine solche Ausgleichsvorrichtung gezeigt. Es ist eine Feder 120 vorgesehen, die an einem Ende an einem Auflager 121 der Haube 22 angreift und über eine Rolle 122 am anderen Ende der Feder 120 in ein Seil 123 eingreift, das mit einem Ende an einem Auflager 124 auf der Seite der Haube 22 befestigt ist, an dem die Stange 90 angeordnet ist. Das Seil 123 ist über einer Kurvenscheibe 125 geführt und befestigt, wobei die Kurvenscheibe auf der Stange 90 angeordnet ist. Die Krümmung der Kurvenscheibe 125 ist so gewählt, daß sie den Kraftverlauf, der durch das Gewicht 100 an der Stange 90 entsteht, zusammen mit der Feder 120 und dem Seil 123 erbringt.

## Patentansprüche

1. Druckdichte Vakuumkammer einer Elektronenstrahl-Graviermaschine zur Aufnahme von zu gravierenden Druckzylindern, gekennzeichnet durch ein maschinenbettartiges Unterteil, eine auf das Unterteil aufgesetzte druckdichte Vakuumhaube (22), die als tonnenartiges Gewölbe ausgebildet und auf einer das Unterteil an seiner Umrandung umgebenden Dichtlippe (23) aufgesetzt ist, eine im oberen Mittelbereich der Haube angeordnete, sich in Längsrichtung der Haube erstreckende Ladeöffnung (4) für die Druckzylinder, einen in die Ladeöffnung (4) absenkbaren Deckel (3), der in seiner Schließstellung, derart bündig in die Öffnung der Haube (22) eingeführt ist, daß Haube (22) und Deckel (3) ein nur von einer Dichtung (24, 31) unterbrochenes einheitliches Gewölbe bilden, wobei die Dichtung (24, 31) aus am Rande vom Deckel (3) und Haube (22) befindlichen Dichtleisten (24, 31) gebildet wird, die eine tangentiale Kraftübertragung in bezug auf das Gewölbe ermöglichen und an den Stirnenden des Deckels und der Ladeöffnung angeordnete Hub- und Transporteinrichtung, mit denen der Deckel aus seiner Schließstellung anhebbar und am äußeren Umfang der Haube in Umfangsrichtung unter Freigabe der Öffnung in Offenstellung verfahrbar ist und von der Offenstellung wieder über die Öffnung zurückbewegbar und in Schließstellung absenkbar ist.

2. Vakuumkammer nach Anspruch 1, dadurch gekennzeichnet, daß die Hub- und Transporteinrichtungen jeweils aus zwei an den Stirnenden der Öffnung (4) angeordneten Ringschienensegmenten (7, 10) bestehen, die eine ringförmige Führungsbahn für den Transport des Deckels (3) zwischen Schließ- und Offenstellung bilden, wobei in ein Segment (7), das zum Anheben des Deckels an einem Ende schwenkbar gelagert ist, der Deckel mittels in dem Ringsegment geführten Rollen eingehängt ist und das andere Segment (10) als Verlängerung des ersten Segmentes (7) an der der Lagerung des ersten Segmentes gegenüberliegenden Seite ortsfest an der Vakuumkammer angeordnet ist.

3. Vakuumkammer nach Anspruch 1 oder 2, dadurch gekennzeichnet, daß Mittel (72, 8) zum Verschwenken des ersten Segmentes (7) und damit zum Anheben des Deckels sowie Mittel (34, 35) zum Transport des Deckels innerhalb der Ringschienensegmente (7, 10) zwischen Schließ- und Offenstellung vorgesehen sind.

4. Vakuumkammer nach einem der Ansprüche 1 bis 3, dadurch gekennzeichnet, daß als Hub- und Transportmittel eine über ein Kettenrad (9) reversierbar angetriebene Transportkette (8) vorgesehen ist, die am Deckel in Umfangsrichtung entgegen der Schwerkraft des Deckels angreift und daß der Antrieb des Kettenrades (9) mit einer Kraftausgleichsvorrichtung (12, 13) zur Gewichtskompensation des Deckels beim Transport des Deckels zwischen Schließ- und Offenstellung vorgesehen ist.

5. Vakuumkammer nach Anspruch 4, dadurch gekennzeichnet, daß die Kraftausgleichsvorrichtung (12, 13) so ausgebildet ist, daß mit dem Kettenrad eine Seilscheibe (12) mir spiraliger Steigung verbunden ist, an die eine ortsfeste Feder (13) über ein mittels der Seilscheibe aufwickelbares Seil angreift.

6. Vakuumkammer nach Anspruch 5, dadurch gekennzeichnet, daß die Kraft der Ausgleichsvorrichtung (12, 13) entsprechend der vom Deckel auf die Kette ausgeübten Zugkraft überproportional ansteigt.

7. Vakuumkammer nach einem der Ansprüche 1 bis 6, dadurch gekennzeichnet, daß als Hubmittel für die Haube ein am Ringsegment (7) an der Haube (22) angreifendes Hubglied (72) vorgesehen ist.

8. Vakuumkammer nach einem der Ansprüche 1 bis 6, dadurch gekennzeichnet, daß als Transportmittel für die Bewegung der Haube ein Motor (40) vorgesehen ist, der an einer sich in Längsrichtung der Haube (3) erstreckenden drehbar gelagerten Stange (90) angreift, durch die eine an der Haube angreifende Transportkette (103) betätigbar ist.

9. Vakuumkammer nach einem der Ansprüche 1 bis 8, dadurch gekennzeichnet, daß eine Gewichtsausgleichsvorrichtung (100, 101) für den Deckel (3) vorgesehen ist, die aus einem als Pendel ausgebildeten Gegengewicht besteht (100), das über eine Kette (103) an der Stange (90) angreift.

10. Vakuumkammer nach einem der Ansprüche 1 bis 8, dadurch gekennzeichnet, daß die Gewichtsausgleichsvorrichtung aus einem Hubglied (110) besteht das mittels eines Hebels an der Stange (90) angreift, dessen Kraft so bemessen ist, daß in jeder Winkellage des Deckels (3) das Gewicht des Deckels kompensiert ist.

11. Vakuumkammer nach einem der Ansprüche 1 bis 8, dadurch gekennzeichnet, daß die Gewichtsausgleichsvorrichtung aus einer Feder (13) besteht, die über einen Seilzug an eine mit der Stange (90) verbundene Kurvenscheibe (125) angreift, wobei Federkraft und Form der Kurvenscheibe (125) so bemessen sind, daß das Gewicht des Deckels (3) in seinen einzelnen Winkellagen während seiner Betätigung kompensiert ist.

## Claims

1. A pressure-tight vacuum chamber of an electron beam engraving machine for reception of printing cylinders to be engraved, characterised by a machine-bed-like lower part, a pressure-tight vacuum hood (22) placed on the lower part, which is constructed as a barrel-like arch and placed on a sealing lip (23) encircling the lower part on its rim, a loading aperture (4) for the printing cylinders which is arranged in the upper central region of the hood and extends in the longitudinal direction of the hood, a cover (3) lowerable into the loading aperture (4) which in its closure position is inserted flush into the aperture of the hood (22) in such manner that the hood (22) and the cover (3) form a unitary arch interrupted only by a seal (24, 31), the seal (24, 31) being formed by sealing strips (24, 31) situated at the edges of the cover (3) and the hood (22), which allows a tangential force transmission with respect to the arch, and a lifting and conveying arrangement situated at the front ends of the cover and of the loading aperture, whereby the cover can be lifted from its closure position and displaced in peripheral direction at the external periphery of the hood into the opened position during of the aperture and can be moved back again from the opened position over the aperture and lowered into the closure position.

2. A vacuum chamber according to claim 1, characterised in that the lifting and conveying systems in each case comprise two annular rail segments (7, 10) arranged at the front ends of the aperture (4) which form an annular guiding track for conveying the cover (3) between the opened and closure positions, the cover being suspended in a segment (7), which is pivotally mounted at one end for lifting the cover, by means of rollers guided in the ring segment and the other segment (10) being fixedly arranged on the vacuum chamber at the side opposite to the mounting for the first segment as an extension of the first segment (7).

3. A vacuum chamber according to claim 1 or 2, characterised in that means (72, 8) are provided for pivotal displacement of the first segment (7) and thus for raising the cover, as well as means (34, 35) for conveying the cover within the annular rail segments (7, 10) between the closure and opened positions.

4. A vacuum chamber according to one of the claims 1 to 3, characterised in that a conveyor chain (8) is provided as a lifting and conveying means, which is reversibly driven via a sprocket wheel (9) and acts on the cover in peripheral direction against the inertia of the cover and that the drive for the sprocket wheel (9) is provided with a force balancing device (12, 13) for weight compensation of the cover during its conveyance between the closure and opened positions.

5. A vacuum chamber according to claim 4, characterised in that the force balancing device (12, 13) is so constructed that the sprocket wheel has coupled to it a rope pulley (12) having a spiral pitch which is acted upon by a fixed spring (13) via a rope which can be wound by means of the rope pulley.

6. A vacuum chamber according to claim 5, characterised in that the force of the balancing device (12, 13) increases more than proportionally as a function of the tractive force exercised on the chain by the cover.

7. A vacuum chamber according to one of the claims 1 to 6, characterised in that a lifting element (72) acting on the ring segment (7) and on the hood (22) is provided as a lifting means for the hood.

8. A vacuum chamber according to one of the claims 1 to 6, characterised in that as a conveying means for displacement of the hood, a motor (40) is provided which acts on a rotatably mounted rod (90) extending in the longitudinal direction of the hood (3), whereby it is possible to operate a conveyor chain (103) acting on the hood.

9. A vacuum chamber according to one of the claims 1 to 8, characterised in that a weight balancing device (100, 101) for the cover (3) is provided, which comprises a counterweight (100) constructed as a pendulum, which acts on the rod (90) via a chain (103).

10. A vacuum chamber according to one of the claims 1 to 8, characterised in that the weight balancing device comprises a lifting element (110) which acts via a lever on the rod (90), the force of which is so determined that the weight of the cover is balanced in any angular position of the cover (3).

11. A vacuum chamber according to one of the claims 1 to 8, characterised in that the weight balancing device comprises a spring (13) which acts via a rope pull on a cam plate (125) coupled to the rod (90), the force of the spring and the shape of the cam plate (125) being so determined that the weight of the cover (3) is balanced at its individual angular positions during its operation.

## Revendications

1. Chambre à vide étanche à la pression d'une machine à graver par faisceau électronique, chambre destinée à recevoir des cylindres d'impression à graver, chambre caractérisée en ce qu'elle comporte:
— une partie inférieure telle qu'un banc de machine,
— un capot à vide (22) étanche à la pression, placé sur cette partie inférieure, et qui revêt la forme d'une voûte en tonneau qui est placée sur une lèvre d'étanchéité (23) entourant la partie inférieure sur son bord,
— une ouverture de chargement (4) pour le cylindre d'impression, disposée dans la zone médiane supérieure du capot, et s'étendant en direction longitudinal de ce capot, un couvercle (3) susceptible d'être abaissé sur l'ouverture de chargement (4), et qui dans sa position de fermeture est introduit jusqu'à l'affleurement dans l'ouverture du capot (22), de sorte que ce capot (22) et le couvercle (3) constituent une voûte homogène qui n'est interrompue que par un joint d'étanchéité (24, 31), ce joint d'étanchéité (24, 31), étant constitué par des bandes d'étanchéité (24, 31) se trouvant sur le bord du couvercle (3) du capot (22), et qui permettent une transmission tangentielle d'efforts par rapport à la voûte,
— des dispositifs de levage et de transport disposés aux extrémités frontales du couvercle et de l'ouverture de chargement, grâce auxquels le couvercle peut être soulevé hors de sa position de fermeture et peut être déplacé dans une position d'ouverture en direction périphérique sur la phériphérie externe du capot, en libérant l'ouverture de celui-ci, et peut être ramené de cette position d'ouverture à nouveau au-dessus de l'ouverture du capot et être abaissé en position de fermeture.

2. Chambre à vide selon la revendication 1, caractérisée en ce que les dispositifs de levage et de transport sont respectivement constitués par deux segments de rails annulaires (7, 10) disposés aux extrémités frontales de l'ouverture (4), et qui constituent une voie annulaire de guidage pour le transport du couvercle (3) entre la position de fermeture et la position d'ouverture, tandis que sur un segment (7), qui pour permettre de soulever le couvercle, est monté à une extrémité de façon à pouvoir pivoter, le couvercle est suspendu au moyen de galets guidés dans le segment annulaire, cependant que l'autre segment (10), en tant que prolongement du premier segment (7), est disposé à poste fixe sur la chambre à vide du côté opposé au palier de pivotement du premier segment.

3. Chambre à vide selon la revendication 1 ou 2, caractérisée en ce qu'il est prévu des moyens (72, 8) pour faire pivoter le premier segment (7) et donc pour soulever le couvercle, ainsi que des moyens (34, 35) pour le transport du couvercle à l'intérieur des segments de rails annulaires (7, 10) entre la position de fermeture et la position d'ouverture.

4. Chambre à vide selon une des revendications 1 à 3, caractérisée en ce qu'il est prévu comme moyen de levage et de transport, une chaîne de transport (8) entraînée de façon reversible par l'intermédiaire d'une roue à chaîne (9), cette chaîne exerçant son action sur le couvercle en direction périphérique contre l'action du poids du couvercle, et l'entraînement de la roue à chaîne (9) étant prévu avec un dispositif d'équilibrage d'efforts (12, 13) pour compenser le poids du couvercle lors du transport du couvercle entre la position de fermeture et la position d'ouverture.

5. Chambre à vide selon la revendication 4, caractérisée en ce que le dispositif de compensation d'effort (12, 13) est réalisé de sorte qu'à la roue à chaîne est relié un tambour de câble (12) avec une pente en hélice, tambour sur lequel agit un ressort fixe (13) par l'intermédiaire d'un câble susceptible de s'enrouler sur le tambour de câble.

6. Chambre à vide selon la revendication 5, caractérisée en ce que l'effort du dispositif de compensation (12, 13) augmente de façon surproportionnelle en fonction de l'effort de traction exercé par le couvercle sur la chaîne.

7. Chambre à vide selon une des revendications 1 à 6, caractérisée en ce que, comme moyen de levage pour le couvercle, il est prévu un organe de levage (72) venant en prise sur le segment annulaire (7) et sur le capot (22).

8. Chambre à vide selon une des revendications 1 à 6, caractérisée en ce qu'il est prévu comme moyen de transport pour le déplacement du couvercle (3), un moteur (40) qui agit sur une tige (90) montée de façon à pouvoir tourner et s'étendant en direction longitudinale du couvercle (3), tige grâce à laquelle une chaîne de transport (103) venant en prise sur le couvercle est susceptible d'être actionnée.

9. Chambre à vide selon une des revendications 1 à 8, caractérisée en ce qu'il est prévu un dispositif compensateur de poids (100, 101) pour le couvercle (3), ce dispositif étant constitué par un contre-poids (100) revêtant la forme d'un pendule et qui agit par l'intermédiaire d'une chaîne (103) sur la tige (90).

10. Chambre à vide selon une des revendications 1 à 8, caractérisée en ce que le dispositif compensateur de poids est constitué par un vérin (110) qui agit sur la tige (90) au moyen d'un levier et dont l'effort est dimensionné de sorte que dans chaque position angulaire du couvercle (3) le poids de ce couvercle est compensé.

11. Chambre à vide selon une des revendications 1 à 8, caractérisée en ce que le dispositif compensateur de poids est constitué par un ressort (13) qui, par l'intermédiaire d'une commande par câble, agit sur un disque-came (125) relié à la tige (90), l'effort développé par ce ressort et la forme du disque-came (125) étant dimensionnés de façon que le poids du couvercle (3) soit compensé dans ses différentes positions angulaires pendant qu'il est actionné.

*Fig. 1*

*Fig. 2*

Fig. 3

Fig. 3a

Fig. 4

Fig. 5

Fig. 6

*Fig. 7*

Fig. 8

Fig.9

Fig. 10

Fig. 11

Fig. 12